# EUROPÄISCHE PATENTSCHRIFT

(11) **EP 0 707 027 B1**
(45) Veröffentlichungstag und Bekanntmachung des Hinweises auf die Patenterteilung: **16.12.1998**
(21) Anmeldenummer: 95115364.2
(22) Anmeldetag: 28.09.1995
(51) Int. Cl.: C08G 69/26

(54) **Copolyamide**
Copolyamid
Copolyamide

(30) Priorität: 29.09.1994 DE 4434899
(43) Veröffentlichungstag der Anmeldung: 17.04.1996
(73) Patentinhaber: EMS-INVENTA AG, 8001 Zürich (CH)
(72) Erfinder: Ulrich, Presenz Dr. rer. nat, CH-7014 Trin (CH); Manfred, Hewel Dr. rer. nat., CH-7415 Rodels (CH)
(74) Vertreter: Müller-Boré & Partner Patentanwälte

(56) Entgegenhaltungen:
- EP-A- 0 411 791
- DATABASE WPI Section Ch, Week 7839 Derwent Publications Ltd., London, GB; Class A23, AN 78-69568A XP002008604 & JP-A-53 096 064 (TOYOBO KK) , 22.August 1978

## Beschreibung

Die Erfindung betrifft den in den Patentansprüchen angegebenen Gegenstand. Die Erfindung betrifft insbesondere neue teilaromatische, in der Regel teilkristalline Copolyamide. Materialien aus diesen Copolyamiden weisen eine spezielle Kombination aus mechanischen Eigenschaften (u.a. Zähigkeit, Flexibilität), thermischen Eigenschaften (u.a. Schmelzpunkt, Sterilisierbarkeit) und Barrierewirkung auf.

In der Verpackungs- und Nahrungsmittel- sowie in der pharmazeutischen Industrie besteht seit langem ein ansteigender Bedarf für geeignete Kunststoffmaterialien zum Ersatz von Glas- und Metallverpackungen. Dies gilt insbesondere für Nahrungsmittel, Getränke und pharmazeutische Produkte. Die in diesen Bereichen angewendeten Mehrschicht-Verpackungssysteme enthalten in der Regel mehrere Schichten aus verschiedenen Polymeren wie Polyethylen, Polypropylen, Polyvinylchlorid und -fluorid, Polyvinylalkohol, Polyethylenvinylalkohol, Polyamide, lonomere, Polyester, Polycarbonate, Polyacrylate und andere Polymere, deren Blends oder deren Mischungen.

Durch die vorgenannten Verpackungssysteme sollen Nahrungsmittel, Getränke sowie medizinische, chemische und biologische und pharmazeutische Produkte geschützt werden. Die Verpackungssysteme umfassen im weitesten Sinne Schläuche, Rohre, Flaschen, Container, Verpackungungsfolien und dergleichen.

Voraussetzung ist jedoch für die vorgenannten Anwendungsgebiete, daß die eingesetzten Kunststoffmaterialien zusätzlich zu einer guten Verarbeitbarkeit und guten mechanischen Eigenschaften Barriereschichteigenschaften gegenüber Gasen wie Sauerstoff, Kohlendioxid, Wasserdampf und weiteren Gasen aufweisen. Weiterhin soll eine Barriere gegenüber Aroma- und Duftstoffen oder toxischen und/oder nicht-toxischen Gasen bereitgestellt werden.

In der Patentliteratur wurden bislang viele Lactam-haltige Copolyamide beschrieben, die den Nachteil aufweisen, daß Monomere aus der Copolyamidschicht migrieren, was bei Verpackungen im Lebensmittelbereich unzulässig bzw. aus toxikologischer Sicht bedenklich ist.

Copolyamide mit Metaxylylendiamin (MXDA) als Komponente sind schon oft beschrieben worden, so auch in EP-A-411 791, EP-A-288 972, GB-A-1,575,801, JP-A-01319531, JP-A-02089643, JP 05064866, JP 52135352 mit aromatischen Dicarbonsäuren, vor allem Isophthalsäure und Terephthalsäure als Comonomeren. Copolyamide dieser Art sind aufgrund der nötigen, hohen Kondensationstemperaturen und der auftretenden hohen Schmelzviskositäten schwierig herzustellen. Die resultierenden Materialien zeigen eine sehr hohe Steifigkeit und sind spröde.

Copolyamide mit MXDA und Caprolactam, wie sie in DE-AS-18 12 018, JP 52135353, US-A-4 826,955 und WO 93/21276 beschrieben worden sind, müssen für den Einsatz im Verpackungsbereich extrahiert werden, um die Migration des Restlactams zu verringern. Der zusätzliche Extraktionsschritt senkt die Rentabilität des Materials. Trotzdem genügen die erhaltenen Materialien nicht allen Anforderungen, z.B. auf dem Medizinalsektor.

In der JP-A-53 096 064 werden gasdichte Folien für Tiefziehen beschrieben, die durch biaxiale Reckung einer Ausgangsmembran aus Copolyamid, welches MXDA und Adipinsäure umfaßt, hergestellt werden. Die besten mechanischen Eigenschaften der Filme werden allerdings erreicht, wenn das Copolymer weiterhin Polyetherblöcke und Nylon-6 enthält, d.h. die bevorzugten Copolyamidzusammensetzungen enthalten das problematische ∈-Caprolactam. Außerdem können die beschriebenen Filme ausschließlich im ausbalanciert biaxial gereckten Zustand verwendet werden.

In EP-A-355 017 und JP-A-05295313 werden Copolyamide aus MXDA und dimeren Fettsäuren beschrieben. Copolyamide dieser Zusammensetzung zeigen aufgrund der langen Kohlenstoffketten der Fettsäurebausteine schlechte Barriereeigenschaften gegenüber Gasen.

Aufgabe der Erfindung ist es daher, Copolyamide mit Metaxylylendiamin (MXDA) als Monomerkomponente für den Einsatz als Sperr- bzw. Barriereschicht in Mehrschichtverpackungsmaterialien zur Verfügung zu stellen, die die genannten Nachteile des Standes der Technik, insbesondere
- hohe Schmelzviskosität
- hohe Steifheit
- hohe Sprödigkeit
überwinden sowie die Notwendigkeit für
- hohe Kondensationstemperaturen
- einen zusätzlichen Extraktionsschritt vermeiden.
Dabei soll die Kombination von mechanischen Eigenschaften, thermischen Eigenschaften und Barrierewirkung im Vordergrund stehen.

Diese Aufgabe wird durch das teilaromatische Copolyamid gemäß Anspruch 1 bzw. die Verwendung gemäß Anspruch 5 bzw. die Barriereschicht gemäß Anspruch 7 bzw. den Mehrschichtverpackungskörper gemäß Anspruch 8 gelöst.

In den Unteransprüchen sind vorteilhafte Ausführungsformen der Erfindung enthalten.

Gegenstand der Erfindung sind insbesondere Copolyamidzusammensetzungen aus Metaxylylendiamin (MXDA) und mindestens drei weiteren Monomeren und deren Verwendung als Barriereschicht in Mehrschichtverbunden.

Copolyamide aus MXDA und Hexamethylendiamin (HMDA) als Aminokomponenten sowie Adipinsäure und mindestens einer weiteren Dicarbonsäure ausgewählt, aus der Gruppe der aliphatischen Dicarbonsäuren mit 7 bis 10 Kohlenstoffatomen sind Materialien, die die angeführten Nachteile nicht aufweisen.

Erfindungsgemäß liegt eine Kombination der folgenden Komponenten vor:

| | | |
|---|---|---|
| (a) | 5 - 30 Gew.-% | HMDA |
| (b) | 10 - 40 Gew.-% | MXDA |
| (c) | 15 - 50 Gew.-% | Adipinsäure |
| (d) | 5 - 45 Gew.-% | mindestens einer weiteren aliphatischen Dicarbonsäure mit 7 bis 10 C-Atomen |

Die Monomeranteile (a) bis (d) addieren sich zu 100 Gew.-%, wobei die Amin- und Säurekomponenten im wesentlichen in äquimolaren Anteilen vorliegen.

Dem Fachmann ist bekannt, daß bei der Polyamidherstellung zur Erzeugung definierter Polymerisationsgrade oder Endgruppen oder aber aus verfahrenstechnischen Gründen die Amin- oder die Säurekomponenten in einem leichten Überschuß, in der Regel nicht über 5 Mol-%, eingesetzt werden.

Eine besonders bevorzugte erfindungsgemäße Zusammensetzung besteht aus

| | | |
|---|---|---|
| (a) | 8 - 27 Gew.-% | HMDA |
| (b) | 13 - 39 Gew.-% | MXDA |
| (c) | 19 - 47 Gew.-% | Adipinsäure |
| (d) | 7 - 41 Gew.-% | Sebazinsäure bzw. Azelainsäure oder deren Mischung, |

wobei sich die Monomeranteile (a) bis (d) zu 100 Gew.-% addieren.

Die erfindungsgemäßen teilaromatischen Copolyamide können übliche Additive nach dem Stand der Technik, wie Kettenregler (bevorzugt Amine oder Diamine), Stabilisatoren, Antischaummittel, Kristallisationsbeschleuniger u.a. enthalten.

Die Herstellung der erfindungsgemäßen, teilaromatischen Copolyamide erfolgt in bekannter Weise nach dem Schmelzkondensationsverfahren.

Je nach Verwendung liegt der bevorzugte Bereich der relativen Viskosität des erfindungsgemäßen Copolyamids (gemessen als 0,5%-ige Lösung in m-Kresol bei 23°C) zwischen 1,6 bis 2,5. Es sind jedoch sowohl höhere als auch tiefere Viskositäten problemlos herstellbar.

Für den Mehrschichtverbund können mehrere, gegebenenfalls unterschiedliche Barriereschichten und mehrere weitere Polymerschichten verwendet werden. Bevorzugte weitere Polymerschichten sind Schutz- und Stützschichten, die dem Mehrschichtverbund definierte Gebrauchseigenschaften geben. Siegelschichten werden notwendigerweise eingesetzt, um den Mehrschichtverbund durch Heißsiegeln verschließbar zu machen. Auch Haftvermittlerschichten können mit Vorteil verwendet werden.

Bevorzugte Polymere für Schutz- und Stützschichten sind solche aus Polyamiden, Polyolefinen oder Polyestern.

Bevorzugte Haftvermittlerschichten sind funktionalisierte, das heißt mit funktionellen Gruppen versehene Polyolefine.

Siegelschichten bestehen vorteilhafterweise aus tiefschmelzenden Polymeren. Bevorzugt sind neben Polyolefinen auch sogenannte Inomere.

Die Herstellung der Mehrschichtverbunde erfolgt vorteilhaft auf Coextrusionsanlagen, kann aber auch mittels Laminierung durchgeführt werden.

Anwendungsgebiete der erfindungsgemäßen, teilaromatischen Copolyamide liegen in Mehrschichtverbunden für u.a. den Medizinalbereich, z.B. als einzige oder zusätzliche Barriereschicht in Infusions- und Ostomybeuteln oder in Schrumpfbeuteln für Fleisch-, Fisch- und Käseverpackung.

Als spezielle Verwendung ist auch diejenige als Blendkomponente für Mischungen mit Ethylenvinylalkohol zu nennen, die der Verbesserung der Tiefzieheigenschaften und der Flexibilität des Ethylenvinylalkohols dient und mit einer relativ geringen Einbuße an Barrierewirkung verbunden ist. Derartige Blends können zur Herstellung von Behältern verwendet werden.

Eine weitere Einsatzmöglichkeit bietet die Verwendung der erfindungsgemäßen Copolyamide für die Herstellung von Mono- und Mehrschicht-Wursthüllen. Hierzu kann das erfindungsgemäße, teilaromatische Copolyamid rein oder als Mischung mit anderen Polymeren, z.B. Polyamiden, bevorzugt Polyamid 6, verwendet werden.

In allen Anwendungsgebieten können die erfindungsgemäßen Copolyamide im nicht orientierten oder im uniaxial bzw. biaxial orientierten Zustand verwendet werden.

Auch ist eine Sterilisation der erfindungsgemäßen Copolyamide zum Teil ohne Verlust der mechanischen Festigkeit und mit nur sehr geringer Einbuße an Transparenz möglich.

Das folgende Beispiel erläutert die Erfindung.

Ein gut rührbarer Autoklav wird mit den Monomeren beschickt, die der Zusammensetzung aus der Tabelle 1 entspricht. In der Druckphase baut sich bei einer Temperatur von ca. 270°C ein Druck von 18 bis 20 bar auf. Dieser wird in der anschließenden Entspannungsphase abgelassen. Im folgenden Entgasungsschritt findet der endgültige Aufbau statt. Die Temperatur der Schmelze sollte 275°C nicht übersteigen. Der gesamte Vorgang dauert zwischen 6 und 9 Stunden.

Das Produkt wird über eine Schmelzepumpe als Strang ausgetragen, in einem Wasserbad abgekühlt, granuliert und anschließend getrocknet.

**Tabelle 1**

| **Zusammensetzung in Gew.-%** | | | | |
|---|---|---|---|---|
| | HMDA | MXDA | Adipinsäure | Sebazinsäure |
| Beispiel | 24,28 | 18,97 | 35,63 | 21,12 |

Die Eigenschaften des erfindungsgemäßen, teilaromatischen Copolyamids sowie die Eigenschaften der auf einem Folienextruder hergestellten Copolyamid-Folien sind in den Tabellen 2 und 3 aufgeführt.

Mit Hilfe eines Gasdurchlässigkeitsprüfgerätes gemäß Norm DIN 53380 (ISO 2556) konnten die in Tabelle 3 aufgeführten Sauerstoff- und Kohlendioxidpermeationen gemessen werden.

Weiterhin wurde die Reißfestigkeit der erfindungsgemäßen Blasfolien (50 µm) gemäß ISO 1184, gemessen quer zur Maschinenrichtung, ermittelt. Dabei wurden Werte zwischen 60 bis 80 N/mm² für die erfindungsgemäßen Copolyamidfolien gemessen.

**Tabelle 2**

| **Eigenschaften** | | |
|---|---|---|
| Schmelzviskosität (275°C/5kg) | [Pa s] | 100 - 600 |
| Kerbschlagzähigkeit Charpy, 23°C ** | [kJ/m²] | * |
| Zug-E-Modul ** | [N/mm²] | 500 |
| TG | [°C] | 57 |
| DSC (Wendepunkt) | | |
| Schmelzpunkt | [°C] | 181 |

| | | |
|---|---|---|
| * Prüfstäbe ohne Bruch (nach DIN 53453) | | |
| ** gemessen an konditionierten Prüfkörpern rF = relative Feuchtigkeit | | |

**Tabelle 3**

| **Eigenschaften** | | |
|---|---|---|
| Blasfolie von 50 µm Dicke | | |
| Permeation | [cm³/m² d bar] | |
| Sauerstoff | 0% rF | 50 |
| | 85% rF | 20 |
| Kohlendioxyd | 0% rF | 140 |
| | 85% rF | 190 |
| Permeation: Messgeräte 0% rF Lissy L 100 85% rF Mocon Oxtran Twin | | |

## Patentansprüche

1. Teilaromatisches Copolyamid auf Basis der Monomerbausteine Metaxylylendiamin und Hexamethylendiamin als Aminkomponenten sowie Adipinsäure und mindestens einer weiteren Dicarbonsäure, ausgewählt aus der Gruppe der aliphatischen Dicarbonsäuren mit 7 bis 10 Kohlenstoffatomen sowie gegebenenfalls weiteren Zusatzstoffen, dadurch gekennzeichnet, daß das Copolyamid aus folgenden Komponenten besteht:
| | | |
|---|---|---|
| (a) | 5 - 30 Gew.-% | Hexamethylendiamin, |
| (b) | 10 - 40 Gew.-% | Metaxylylendiamin, |
| (c) | 15 - 50 Gew.-% | Adipinsäure, |
| (d) | 5 - 45 Gew.-% | mindestens einer aliphatischen Dicarbonsäure mit 7 bis 10 Kohlenstoffatomen, bevorzugt Sebazinsäure und/oder Azelainsäure, |
wobei sich die Komponenten (a) bis (d) auf 100 Gew.-% ergänzen und die Säuregruppen und die Aminogruppen im wesentlichen in äquimolaren Anteilen vorliegen.

2. Copolyamid gemäß Anspruch 1, dadurch gekennzeichnet, daß es aus
| | | |
|---|---|---|
| (a) | 8 - 27 Gew.-% | Hexamethylendiamin, |
| (b) | 13 - 39 Gew.-% | Metaxylylendiamin, |
| (c) | 19 - 47 Gew.-% | Adipinsäure, |
| (d) | 7 - 41 Gew.-% | mindestens einer aliphatischen Dicarbonsäure mit 7 bis 10 C-Atomen, bevorzugt Sebazinsäure und/oder Azelainsäure, |
besteht,
wobei sich die Komponenten (a) bis (d) auf 100 Gew.-% ergänzen und die Säuregruppen und die Aminogruppen im wesentlichen in äquimolaren Anteilen vorliegen.

3. Copolyamid gemäß Anspruch 1 und 2, dadurch gekennzeichnet, daß es aus etwa 24 Gew.-% Hexamethylendiamin, etwa 19 Gew.-% Metaxylylendiamin, etwa 35 Gew.-% Adipinsäure und etwa 21 Gew.-% Sebazinsäure besteht.

4. Copolyamid gemäß einem der vorhergehenden Ansprüche, dadurch gekennzeichnet, daß es eine relative Viskosität (gemessen als 0,5%-ige Lösung in m-Kresol bei 23°C) zwischen 1,6 und 2,5 besitzt.

5. Verwendung des Copolyamids gemäß einem der vorhergehenden Ansprüche 1 bis 4 zur Herstellung von Blends mit anderen thermoplastischen Polymeren, insbesondere mit Ethylenvinylalkoholpolymeren.

6. Verwendung des Copolyamids gemäß einem der vorhergehenden Ansprüche 1 bis 4 zur Herstellung von Barriereschichten für Mehrschichtverbunde wie Folien oder Behälter, Infusions- oder Ostomybeutel, Schrumpfbeutel für Fleisch-, Fisch- und Käseverpackungen oder für Mono- bzw. Mehrschicht-Wursthüllen, wobei die Copolyamide rein oder als Mischung mit anderen Polymeren, insbesondere in Kombination mit weiteren Polymerschichten, vorliegen können.

7. Barriereschicht aus teilaromatischem Copolyamid, insbesondere für Mehrschichtverpackungen, dadurch gekennzeichnet, daß die Barriereschicht transparent ist und das Copolyamid ein teilaromatisches Copolyamid gemäß einem der Ansprüche 1 bis 4 ist.

8. Mono- bzw. Mehrschicht-Verpackungskörper, dadurch gekennzeichnet, daß er mindestens eine Barriereschicht aus einem teilaromatischen Copolyamid gemäß einem der Ansprüche 1 bis 4 und/oder mindestens eine Barriereschicht aus Mischungen des teilaromatischen Copolyamids gemäß einem der Ansprüche 1 bis 4 mit anderen thermoplastischen Polymeren, insbesondere mit Ethylenvinylalkoholpolymeren enthält.

9. Verpackungskörper gemäß Anspruch 8, dadurch gekennzeichnet, daß er zusätzlich zu der mindestens einen Barriereschicht weitere Polymerschichten, insbesondere Stütz- und/oder Schutzschichten und/oder Siegelschichten und/oder Haftvermittlerschichten, enthält.

10. Verpackungskörper gemäß Anspruch 8 oder 9, dadurch gekennzeichnet, daß die Polymere bzw. die Polymerschichten ausgewählt sind aus der Gruppe, die aus Polyvinylalkohol, Polyacrylat, Polyolefin, Polyester, Copolyester, Polyamid, Copolyamid, Polycarbonat oder anderen Polymeren, deren Blends oder deren Mischungen besteht.

11. Verpackungskörper gemäß einem der Ansprüche 8 bis 10, dadurch gekennzeichnet, daß er aus einer Barriereschicht aus Mischungen des teilaromatischen Copolyamids gemäß einem der Ansprüche 1 bis 4 mit anderen Polymeren, insbesondere Polyamiden, besonders bevorzugt Polyamid 6 besteht.

12. Verpackungskörper gemäß einem der Ansprüche 8 bis 11, dadurch gekennzeichnet, daß er eine Folie, ein Behälter, ein Infusions- oder Ostomybeutel, ein Schrumpfbeutel für Fleisch-, Fisch- und Käseverpackungen oder eine Wursthülle ist.

13. Verpackungskörper gemäß einem der Ansprüche 8 bis 12, dadurch gekennzeichnet, daß er durch Coextrusion, Blasformen, gegebenenfalls kombiniert mit Tiefziehen, hergestellt ist.

## Claims

1. Partially aromatic copolyamide based on the monomeric building blocks M-xylylenediamine and hexamethylenediamine as amine components and on adipic acid and at least one other dicarboxylic acid selected from the class consisting of the aliphatic dicarboxylic acids having from 7 to 10 carbon atoms, and also, if desired, from other additives, characterized in that the copolyamide is composed of the following components:
| | | |
|---|---|---|
| (a) | from 5 to 30% | by weight of hexamethylene diamine, |
| (b) | from 10 to 40% | by weight of M-xylylenediamine, |
| (c) | from 15 to 50% | by weight of adipic acid, |
| (d) | from 5 to 45% | by weight of at least one aliphatic dicarboxylic acid having from 7 to 10 carbon atoms, preferably sebacic acid and/or azelaic acid, |
where the total of components (a) to (d) is 100% by weight and the proportions of the acid groups and the amino groups are essentially equimolar.

2. Copolyamide according to Claim 1, characterized in that it is composed of
| | | |
|---|---|---|
| (a) | from 8 to 27% | by weight of hexamethylene diamine, |
| (b) | from 13 to 39% | by weight of M-xylylenediamine, |
| (c) | from 19 to 47% | by weight of adipic acid, |
| (d) | from 7 to 41% | by weight of at least one aliphatic dicarboxylic acid having from 7 to 10 carbon atoms, preferably sebacic acid and/or azelaic acid, |
where the total of components (a) to (d) is 100% by weight and the proportions of the acid groups and the amino groups are essentially equimolar.

3. Copolyamide according to Claim 1 and 2, characterized in that it is composed of about 24% by weight of hexamethylenediamine, about 19% by weight of M-xylylenediamine, about 35% of adipic acid and about 21% by weight of sebacic acid.

4. Copolyamide according to one of the preceding claims, characterized in that it has a relative viscosity (measured as 0.5% strength solution in m-cresol at 23°C) of from 1.6 to 2.5.

5. Use of the copolyamide according to one of the preceding Claims 1 to 4 for preparing blends with other thermoplastic polymers, in particular with ethylene vinyl alcohol polymers.

6. Use of the copolyamide according to one of the preceding Claims 1 to 4 for preparing barrier layers for composites having more than one layer, such as films or containers, infusion bags or ostomy bags, shrink bags for meat packaging, fish packaging and cheese packaging or for sausage casings having one or more layers, where the copolyamides may be present as such or as a mixture with other polymers, in particular combined with other polymeric layers.

7. Barrier layer made from partially aromatic copolyamide, in particular for packaging having more than one layer, characterized in that the barrier layer is transparent and the copolyamide is a partially aromatic copolyamide according to one of Claims 1 to 4.

8. Packaging having one or more layers, characterized in that it has at least one barrier layer made from a partially aromatic copolyamide according to one of Claims 1 to 4 and/or at least one barrier layer made from mixtures of the partially aromatic copolyamide according to one of Claims 1 to 4 with other thermoplastic polymers, in particular with ethylene vinyl alcohol polymers.

9. Packaging according to Claim 8, characterized in that it comprises, additionally to the at least one barrier layer, other polymeric layers, in particular supporting layers and/or protective layers and/or sealable layers and/or adhesion-promoting layers.

10. Packaging according to Claim 8 or 9, characterized in that the polymers and/or the polymeric layers are selected from the class consisting of polyvinyl alcohol, polyacrylate, polyolefin, polyester, copolyester, polyamide, copolyamide, polycarbonate and other polymers, blends of these or mixtures of these.

11. Packaging according to one of Claims 8 to 10, characterized in that it is composed of a barrier layer made from mixtures of the partially aromatic copolyamide according to one of Claims 1 to 4 with other polymers, in particular with polyamides, particularly preferably nylon-6.

12. Packaging according to one of Claims 8 to 11, characterized in that it is a film, a container, an infusion or ostomy bag, a shrink bag for meat packaging, fish packaging or cheese packaging, or a sausage casing.

13. Packaging according to one of Claims 8 to 12, characterized in that it is produced by coextrusion, blow moulding, combined if desired with thermoforming.

## Revendications

1. Copolyamide partiellement aromatique, à base des monomères constitutifs métaxylylènediamine et hexaméthylènediamine, à titre de composants du type amine, ainsi que d'acide adipique et d'au moins un acide dicarboxylique supplémentaire, choisi dans le groupe formé par les acides dicarboxyliques aliphatiques comportant de 7 à 10 atomes de carbone, ainsi qu'éventuellement d'autres additifs, caractérisé en ce que le copolyamide est constitué des composants suivants :
| | | |
|---|---|---|
| (a) | 5 à 30% en poids | d'hexaméthylènediamine, |
| (b) | 10 à 40% en poids | de métaxylylènediamine, |
| (c) | 15 à 50% en poids | d'acide adipique, |
| (d) | 5 à 45% en poids | d'au moins un acide dicarboxylique aliphatique comportant de 7 à 10 atomes de carbone, de préférence, l'acide sébacique et/ou l'acide azélaïque, |
où les composants (a) à (d) totalisent 100% et les radicaux acide et les radicaux amino se présentent essentiellement en proportions équimolaires.

2. Copolyamide suivant la revendication 1, caractérisé en ce qu'il se compose de
| | | |
|---|---|---|
| (a) | 8 à 27% en poids | d'hexaméthylènediamine, |
| (b) | 13 à 39% en poids | de métaxylylènediamine, |
| (c) | 19 à 47% en poids | d'acide adipique, |
| (d) | 7 à 41% en poids | d'au moins un acide dicarboxylique aliphatique comportant de 7 à 10 atomes de carbone, de préférence, l'acide sébacique et/ou l'acide azélaïque, |
où les composants (a) à (d) totalisent 100% et les radicaux acide et les radicaux amino se présentent essentiellement en proportions équimolaires.

3. Copolyamide suivant les revendications 1 et 2, caractérisé en ce qu'il se compose d'environ 24% en poids d'hexaméthylènediamine, d'environ 19% en poids de métaxylylènediamine, d'environ 35% en poids d'acide adipique et d'environ 21% en poids d'acide sébacique.

4. Copolyamide suivant l'une quelconque des revendications précédentes, caractérisé en ce qu'il possède une viscosité relative (mesurée sous forme d'une solution à 0,5% à 23°C dans le m-crésol) comprise entre 1,6 et 2,5.

5. Utilisation du copolyamide suivant l'une quelconque des revendications 1 à 4 qui précèdent pour la fabrication d'un mélange avec d'autres polymères thermoplastiques, en particulier, des polymères d'éthylène et d'alcool vinylique.

6. Utilisation du copolyamide suivant l'une quelconque des revendications 1 à 4 qui précèdent, pour la fabrication de couches formant barrière ou écran, pour des lamifiés ou stratifiés multicouche, comme des feuilles ou des récipients, des sacs pour perfusion ou ostomye, des sacs à contraction pour emballages destinés à la viande, au poisson et au fromage ou pour des enveloppes pour saucisses monocouche ou multicouche, où les copolyamides peuvent se présenter à l'état pur ou sous forme de mélange à d'autres polymères, plus particulièrement, en combinaison avec d'autres couches de polymères.

7. Couche formant écran ou barrière en un copolyamide partiellement aromatique, plus particulièrement, pour des emballages multicouche, caractérisée en ce que la couche formant barrière ou écran est transparente et le copolyamide est un copolyamide partiellement aromatique suivant l'une quelconque des revendications 1 à 4.

8. Article d'emballage monocouche ou multicouche, caractérisé en ce qu'il contient au moins une couche formant écran ou barrière en un copolyamide partiellement aromatique suivant l'une quelconque des revendications 1 à 4 et/ou au moins une couche formant écran ou barrière en mélanges du copolyamide partiellement aromatique suivant l'une quelconque des revendications 1 à 4 et d'autres polymères thermoplastiques, plus particulièrement, des polymères de l'éthylène et de l'alcool vinylique.

9. Article d'emballage suivant la revendication 8, caractérisé en ce qu'il contient complémentairement à l'au moins une couche formant écran ou barrière, d'autres couches de polymères, plus particulièrement, des couches de support ou soutien et/ou de protection et/ou des couches d'étanchéité et/ou des couches conférant de l'adhésivité.

10. Article d'emballage suivant la revendication 8 ou 9, caractérisé en ce que les polymères ou les couches de polymères se choisissent dans le groupe formé par le poly(alcool vinylique), le polyacrylate, la polyoléfine, le polyester, le copolyester, le polyamide, le copolyamide, le polycarbonate ou d'autres polymères, leurs mélanges ou leurs blends.

11. Article d'emballage suivant l'une quelconque des revendications 8 à 10, caractérisé en ce qu'il se compose d'une couche formant écran ou barrière en mélanges du copolyamide partiellement aromatique suivant l'une quelconque des revendications 1 à 4 et d'autres polymères, plus particulièrement, des polyamides, bien mieux encore, du polyamide 6.

12. Article d'emballage suivant l'une quelconque des revendications 8 à 11, caractérisé en ce qu'il se compose d'une feuille, d'un récipient, d'un sac pour perfusion ou ostomye, d'un sac à contraction pour l'emballage de viandes, de poissons et de fromages, ou une enveloppe pour saucisses.

13. Article d'emballage suivant l'une quelconque des revendications 8 à 12, caractérisé en ce qu'on le fabrique par coextrusion, moulage par soufflage, éventuellement, en combinaison avec un emboutissage.
